Europäisches Patentamt

**European Patent Office**

Office européen des brevets

(11) Publication number: **0 023 070**
A1

## (12) EUROPEAN PATENT APPLICATION

(21) Application number: **80200711.2**

(22) Date of filing: **19.07.80**

(51) Int. Cl.³: **C 08 L 19/00**
**C 08 L 9/00, C 08 L 23/02**
**//(C08L19/00, 9/00, 23/02),**
**(C08L9/00, 19/00), (C08L23/02,**
**19/00)**

(30) Priority: **24.07.79 NL 7905700**

(43) Date of publication of application:
**28.01.81 Bulletin 81/4**

(84) Designated Contracting States:
**AT BE CH DE FR GB IT LI NL SE**

(71) Applicant: **STAMICARBON B.V.**
**Postbus 10**
**NL-6160 MC Geleen(NL)**

(84) Designated Contracting States:
**BE DE FR GB IT NL**

(71) Applicant: **VREDESTEIN ICOPRO B.V.**
**President Kennedylaan 104**
**NL-6883 AX Velp(NL)**

(84) Designated Contracting States:
**CH LI SE AT**

(72) Inventor: **Zijp, Jan Willem Hendrik**
**Verdistraat 6**
**NL-6164 CK Geleen(NL)**

(74) Representative: **Philippens, Martin Hubert Johan**
**Jacques et al,**
**OCTROOIBUREAU DSM Postbus 9**
**NL-6160 MA Geleen(NL)**

(54) **Thermoplastic elastomeric composition and process for preparation thereof.**

(57) Thermoplastic elastomeric compositions are prepared by mixing powdered vulcanized rubber having a mean particle size of below 1,5 mm and a thermoplastic olefin or diolefin polymer, particular polyethyleen, in a weight ratio of from 1 : 3 to 3 : 1, and a non-ionic surfactant in an amount of 0,1-5 wt.% referring to the total amount of polymers. The addition of a non-ionic surfactant greatly improves the bonding between the two main components, thus yielding compositions of a very low level of porosity and improved mechanical properties, particularly superior toughness.

The compositions can be moulded or extruded to a variety of products, as there are profiles, roofings, fencing posts, pallets, but also shoe soles, saddle covers, solid tyres, sprinkling funnels, etc.

EP 0 023 070 A1

STAMICARBON B.V.

THERMOPLASTIC ELASTOMERIC COMPOSITION AND PROCESS FOR PREPARATION THEREOF

The invention relates to a thermoplastic elastomeric composition obtained by mixing a powdered vulcanized rubber, a thermoplastic polymer and an additive.

Society is to a growing degree confronted with the desirability of recovering waste products and converting them to a form suitable for reuse. The major reasons for this are the increasingly heavy burden on the natural environment and the decreasing availability of raw materials.

A particularly relevant example is the situation concerning waste vulcanized rubber products, in particular used pneumatic tyres, which are turned out in great quantities and cannot in general be rendered suitable for reuse without fairly intensive preliminary treatment. For this reason, methods have long been sought in all quarters to utilize these products in such a way that an optimum is obtained between as low as possible processing costs on the one hand and a technical application of the highest possible quality on the other. A very suitable application for vulcanized rubber from waste products is as a filler in polymers, particularly thermoplastic polymers, whereby the cost price of the plastic is reduced and a modified property configuration is obtained. For this purpose, little more has to be done than reduce the vulcanized rubber to a state such that it can be mixed with the thermoplastic polymer, e.g. by cutting or grinding.

A crucial problem in preparing mixtures based on a vulcanized rubber and a thermoplastic polymer is the bonding between the two components, however. If there is insufficient bonding between the rubber particles and the polymer phase, porosity and poor mechanical properties result, which is for many applications very undesirable.

In U.S. Patent 4028288 a method is described for controlling the porosity of mixtures of - comparatively coarse - vulcanized rubber particles and a thermoplastic polymer by varying the relative quantity of rubber and the dimensions of the rubber particles. A disadvantage of this method is that a very low degree of porosity cannot thus be achieved at a somewhat higher rubber content, so that the properties of such mixtures will not have much scope for variation and these mixtures will not be suitable for a large number of applications.

The problem of proper bonding between vulcanized rubber particles and thermoplastic phase is admitted in German Offenlegungsschrift 2408690, in which the preparation is described of a thermoplastic material based on rubber particles and a minor quantity, viz. less than 40 wt. %, preferably less than 30 wt. %, of a 'selected' thermoplastic polymer as a binder. For this purpose, the two components are chosen such that they differ, in terms of solubility parameter, by less than 1, preferably less than 0.5 units, from one another. A disadvantage of this method is that in many cases the solubility parameter must be determined for each charge of vulcanized rubber and thermoplastic polymer and a restriction must be accepted as regards the possibilities for combining the two basic constituents. As will be shown in a comparative example below, products with inferior properties are obtained by the method according to the Offenlegungsschrift mentioned.

In Netherlands Patent Specification 7806735 a method is revealed for the preparation of products from recycled rubber and a thermoplastic or elastomeric polymer, characterized in that an additive is supplied consisting of 0.1-10 wt.% of a plasticizing agent and/or lubricant and 0.1-10 wt. % of a curing agent, both calculated relative to the total mixture. As a plasticizing and/or lubricating agent (waste) oil is specifically mentioned. A major advantage of this method is found to be its potential for regulating the porosity of the final products; in particular, the manufacture is described of porous drainage tubing using a mixture of 70-75 parts by wt. of rubber powder and 30-25 parts by wt. of polyethylene, in addition to 1 part by wt. of lubricant plus sulphur. The vulcanization of the mixtures, which is inherent to the method, will render the method more costly and more critical in its application, however.

It has now been found to be possible to prepare a thermoplastic elastomeric composition from a vulcanized rubber and a thermoplastic polymer, which composition possesses a very low level of porosity and improved mechanical characteristics, in particular superior thoughness.

The thermoplastic elastomeric composition according to the invention, composed of powdered vulcanized rubber, thermoplastic polymer and an additive is now characterized in that it contains: a powdered

4

adverse effect on their appearance. The powder can be dried by treating with hot air for several hours, for example at a temperature of 50-150 $^{o}$C for 1-12 hours. A particular advantage of the invention is that the use of a non-ionic surfactant during the mixing of the components renders it easier to remove any moisture still remaining.

The thermoplastic olefin or diolefin polymer may be constituted of ethylene, propylene, butylene, butadiene or isoprene or of a mixture of these, or it may be a copolymer of ethylene, propylene, butylene, optionally hydrogenated butadiene or isoprene with less than 50 wt.% of one or more other monomers, such as other olefins or styrene. Polyethylene is to be preferred, optionally mixed with minor quantities of one or more other polymers. These thermoplastic polymers are also very suitable in the form of waste material, such as is turned out in their normal processing.

In the composition according to the invention the powdered vulcanized rubber and the thermoplastic polymer are present in a ratio of from 1 : 3 to 3 : 1 by weight. At lower weight ratios not enough of an economic benefit can be attained and to rigid a material is obtained for many applications. A higher ratio by weight reduces the tensile strength of the composition excessively in relation to the tensile strength the pure thermoplastic polymer will possess. If a non-ionic surfactant is used, it is found that the toughness of the composition increases with an increasing quantity of rubber powder, in contrast with the result obtained with application of ionic surfactants. The composition according to the invention preferably contains the powdered vulcanized rubber having a mean particle size of below 1.5 mm and the thermoplastic olefin or diolefin polymer, in a weight ratio of from 1 : 2 to 2 : 1, more specifically of from 2 : 3 to 3 : 2.

The thermoplastic composition according to the invention can be prepared by mixing the powdered vulcanized rubber, the thermoplastic polymer and the non-ionic surfactant under shearing forces in a conventional mixing device, e.g. in a Banbury kneader mixer or on the rolls, until a homogeneous mixture is obtained. This is preferably carried out a temperature above the processing temperature or melting point of the thermoplastic polymer, for example at a temperature of from 100 $^{o}$C to 250 $^{o}$C, in particular from 130 $^{o}$C to 200 $^{o}$C. It is strongly recommended not to choose too high a temperature, because at higher

BAD ORIGINAL

vulcanized rubber having a mean particle size of below 1.5 mm and a thermoplastic olefin or diolefin polymer, the weight ratio of rubber and thermoplastic polymer being from 1 : 3 to 3 : 1, and 0.1-5 wt.% calculated relative to the total quantity of the other components, of a non-ionic surfactant.

The non-ionic surfactant is added in a quantity of 0.1-5 parts by wt. In a lower quantity it is insufficiently active in the mixture, while at more than 5 parts by wt. per 100 parts by wt. of the other components the sensitivity to water of the material obtained rises sharply, rendering it less suitable for applications outside. The best results are obtained at a quantity of 0.5-2.5 part by wt. of the non-ionic surfactant.

Very suitable non-ionic surfactants are the reaction products of a hydroxyl compound with one or more units of an alkene oxide, in particular ethylene oxide and/or propylene oxide, 1-500 alkene oxide units being present in the molecule, preferably 10-100 units. Suitable hydroxyl compounds are alcohols for example, preferably alcohols with 4-18 carbon atoms per molecule, phenols or other compounds containing hydroxyl groups such as fatty acids or partially hydrolyzed oils and fats. The phenols represent an important group herein, preferably the mono- or polyalkyl-substituted phenols. The alkyl groups preferably contain 1-12 carbon atoms per group. Examples of especially suitable non-ionic surfactants are the reaction products of octyl or nonyl phenol and ethylene oxide. Suitable non-ionic surfactants are the block copolymers of ethylene oxide and propylene oxide with terminal OH groups, preferably those containing 60-90 wt. % ethylene oxide. A third group of suitable compounds are polar vinyl polymers, e.g. polyvinyl pyridine, polyvinyl pyrrolidone, polyvinyl alcohol and cellulose derivatives, e.g. carboxymethylcellulose (CMC).

The powdered rubber preferably has a mean particle size of between 90 $\mu$ m and 1200 $\mu$ m and more particularly a median value of between 300 $\mu$ m and 800 $\mu$ m. The rubber is, for instance, taken from pneumatic tyres, in particular from tyres of passenger cars, and can be reduced to the above dimensions by grinding - preferably cryogenically. For some applications it is advisable to use the tread material of the tyres, as this contains relatively little canvas. The powder is preferably freed of ferrous constituents and moisture. The moisture present in the powder increases the porosity of the products formed and has, moreover, an temperatures a pronounced generation of odour and gas may appear. Moreover, the products from compositions thus obtained will give off an obnoxious smell during a long time after moulding.

It is also possible to mix the powdered rubber and the thermoplastic polymer in the method described above, the non-ionic surfactant being added subsequently, to the mass, preferably in a molten form.

The whole mass is then blended without kneading for some time, for instance 5-50 min., in a rolling drum or paddle mixer.

Provided the thermoplastic polymer is present in an appropriate form, for example in particle form, simple mixing without kneading all components may be sufficient for some purposes.

A variety of additives can be incorporated in the thermoplastic elastomeric composition according to the invention, e.g. regenerated rubber, lubricants, carbon black, oil, anti-oxidants, stabilizers, flame retardants, etc. Surprisingly, it has been found that the composition is readily colourable, for instance by the addition of pigments, despite the considerably quantity of carbon black generally present in the rubber powder employed.

The thermoplastic elastomeric composition can be moulded by extrusion or injection moulding or by another method to a variety of products with a wide range of applications. Possible applications include extruded sealing profiles, roofing, floor coverings for sheds, fencing posts, sleepers, pallets, etc., as well as shoe soles, saddle covers, anti-skid ladder supports, mud flaps, solid tyres, sprinkling funnels, etc.

The invention is further elucidated with reference to the following examples and comparative examples.

Examples I-III

In a heated Banbury mixer homogeneous mixtures were prepared from high-density polyethylene (STAMYLAN 8409) and rubber powder by kneading for 5 min. at a temperature varying from 100 $^{\circ}$C to 175 $^{\circ}$C. The rubber powder was obtained by grinding passenger-car tyres and consisted substantially of SBR, butadiene rubber and a minor quantity of natural rubber. The particle size was between 90 $\mu$m and 1200 $\mu$m, with a median value of 500 $\mu$m. The powder was dried for two hours at 80 $^{\circ}$C after grinding and then rendered free of iron with the aid of a magnet. Immediately after mixing in the Banbury mixer a non-ionic surfactant of the polyethylene-oxide type (CARBOWAX 4000) in the molten state

BAD ORIGINAL

was added to the hot mixtures.

The whole mass was subsequently mixed in a drum for 15 min.

Test specimens measuring 50 x 100 mm and 2 mm thickness were then moulded from the compositions thus obtained in an injection-moulding machine, at a polymer temperature of about 170 $^{\circ}$C and a mould temperature of 50 $^{\circ}$C. Cycletime was approx. 25 sec.

The composition (in parts by weight) and the mechanical characteristics, combined with those of the compounds as per comparative examples A-K, are given in the table below. The compositions could be processed very well in an extruder. A good quality tubing could thus be obtained.

Comparative examples A-K

By the same procedure as in Examples I-III, compositions were prepared in which CARBOWAX 4000 was replaced by an anionic (STRUKTOL W 33) or a cationic (ARQUAD 18) surfactant or without addition of any surfactant.

To determine the mechanical characteristics, the test specimens, which were notched 5 mm on both longitudinal sides, were tensioned in a tensile strength tester and extended to max. 45 % of their original length. During the whole test the tensile force applied was measured as a function of the elongation.

The notch energy is defined by

$$\frac{\text{force x elongation (integrated over the whole elongation)}}{\text{nett original cross-sectionel area of the test specimen}}$$

and expressed in $\frac{KJ}{m^2}$.

The specific strain is defined by

$$\frac{\text{notch energy x original length of the test specimen}}{\text{maximum force occuring during elongation to 45 \%}} \times 100\ \%$$

and expressed in %.

Table

|  | Blank Examples | | | Comparative examples | | | | | | | | |
|---|---|---|---|---|---|---|---|---|---|---|---|---|
|  | I | II | III | A | B | C | D | E | F | G | H | K |
| **Composition** | | | | | | | | | | | | |
| High-density polyethylene | 100 | 65 | 50 | 35 | 65 | 50 | 35 | 65 | 50 | 35 | 65 | 50 | 35 |
| Rubber powder | 0 | 35 | 50 | 65 | 35 | 50 | 65 | 35 | 50 | 65 | 35 | 50 | 65 |
| Surfactant non-ionic | 0 | 1 | 1 | 1 | | | | | | | | | |
| anionic | | | | | 1 | 1 | 1 | | | | | | |
| cationic | | | | | | | | 1 | 1 | 1 | | | |
| **Mechanical characteristics** | | | | | | | | | | | | |
| Notch energy $kJ/m^2$ | 391 | 160 | 145 | 95 | 145 | 110 | 70 | 115 | 75 | 65 | 54 | 76 | 62 |
| Specific strain % | 38.3 | 22 | 31 | 34.5 | 18.5 | 16.8 | 16 | 14.5 | 14.5 | 16 | 13 | 16 | 20 |

8

COMPARISON OF NOTCH ENERGY: $kJ/m^2$

(100 % High density Polyethylene = 391)

| Composition By Wt. Ratio High density Polyethylene:Rubber | 65/35 (Example) | | 50/50 (Example) | | 35/65 (Example) | |
|---|---|---|---|---|---|---|
| Non-Ionic Surfactant[*] | 160 | (I) | 145 | (II) | 95 | (III) |
| Anionic Surfactant[*] | 145 | (A) | 110 | (B) | 70 | (C) |
| Cationic Surfactant[*] | 115 | (D) | 75 | (E) | 65 | (F) |
| Zero Surfactant | 54 | (G) | 76 | (H) | 62 | (K) |

[*]One part by weight, each instance.

COMPARISON OF SPECIFIC STRAIN, PERCENT

(100 % High density Polyethylene = 38.3 %)

| Composition By wt. Ratio High density Polyethylene:Rubber | 65:35 (Example) | | 50:50 (Example) | | 35:65 (Example) | |
|---|---|---|---|---|---|---|
| Non-Ionic Surfactant[*] | 22 | (I) | 31 | (II) | 34.5 | (III) |
| Anionic Surfactant[*] | 18.5 | (A) | 16.8 | (B) | 16 | (C) |
| Cationic Surfactant[*] | 14.5 | (D) | 14.5 | (E) | 16 | (F) |
| Zero Surfactant | 13 | (G) | 16 | (H) | 20 | (K) |

[*]One part by weight, each instance.

9

The results show that the toughness as represented by the specific strain values is very much improved by the addition of 1 % non-ionic surfactants. The notch energy, too, is considerably improved in this way.

In visual evaluation of the test specimens, a sharp decrease in the degree of porosity is observed if 1 % non-ionic surfactant is added; this is observed less clearly if the other two surfactants are added.

### Example IV

By the same procedure as in Examples I-III compositions were prepared using thermoplastic elastomers on a polyolefin basis as well as based on block copolymers of butadiene and styrene (KELTAN TP 0300, KELTAN TP 0500 and CARIFLEX 4113, respectively), with rubber powder contents of 50 to 70 wt.%. Here, too, a sharply decreased porosity was observed if 1 % non-ionic surfactant was added.

### Example V

Mixtures having the same composition as in Example IV were prepared, but now by mixing on heated rollers (at 140-160 $^{o}$C) instead of in a Banbury mixer. Very much improved rolling behaviour was here observed when 1 wt. % non-ionic surfactant was added. A coherent rolled sheet was more rapidly formed.

### Comparative example L

A mixture of high-density polyethylene and undried rubber powder in a 1 : 1 weight ratio was prepared in a Banbury mixer and then moulded to test specimens in accordance with Example 1 of German Offenlegungsschrift 2408690. It was found that this mixture gave off a considerable odour during processing and caused a white deposit on the mould wall during injection moulding. The surface of the specimens was patchy.

### Comparative example M

A mixture of polyvinyl chloride (PVC) and dried rubber powder in a 1 : 1 weight ratio was prepared in a Banbury mixer. It was found to be impossible to extrude this mixture to coherent tubing even at temperatures to 200 $^{o}$C. The melt was too incoherent for this purpose. The rubber particles were not well enclosed by the PVC, causing the surface to remain rough (the

BAD ORIGINAL

composition resembled coarse sandpaper). The pieces of tubing possessed virtually no mechanical strength.

Examples VI and VII

By the same procedure as in Example I-III compositions were prepared, however with 0.3 wt. % Carbowax 4000. The rubber particles were made from tread component material of tires and had a low fiber and cord content. Articles with reduced porosity could be injection moulded which were acceptable for certain applications such as mud flaps.

If these mixtures were made with 4.5 wt. % Carbowax 4000 no porosity could be observed. However the surface was greasy and the yield on extruding was significantly lower.

# C L A I M S

Thermoplastic elastomeric composition prepared from a powdered
vulcanized rubber, a thermoplastic polymer and an additive,
characterized in that the thermoplastic elastomeric composition
contains: a powdered vulcanized rubber having a mean particle size
of below 1.5 mm and a thermoplastic olefin or diolefin polymer,
the weight ratio of rubber and thermoplastic polymer being from 1 : 3 to
3 : 1, and 0.1-5 wt. %, calculated relative to the total quantity
of the other components, of a non-ionic surfactant.

2. Thermoplastic elastomeric composition according to Claim 1, characterized in that the composition contains 0.5 - 2.5 wt. %, calculated
relative to the total quantity of the other components, of the non-
ionic surfactant.

3. Thermoplastic elastomeric composition according to Claim 1 or 2,
characterized in that the reaction product of a hydroxyl compound
with 1-500 units of an alkene oxide is applied as a non-ionic
surfactant.

4. Thermoplastic elastomeric composition according to Claim 3,
characterized in that the reaction product of a phenol with one or
more alkyl groups having 1-12 carbon atoms and 1-500 ethylene
oxide units is applied as a non-ionic surfactant.

5. Thermoplastic elastomeric composition according to any of Claims
1-4, characterized in that the weight ratio of rubber and thermoplastic polymer is from 1 : 2 to 2 : 1.

6. Thermoplastic elastomeric composition according to Claim 5,
characterized in that the weight ratio of rubber and thermoplastic
polymer is from 2 : 3 to 3 : 2.

7. Thermoplastic elastomeric composition according to any of Claims
1-6, characterized in that the powdered vulcanized rubber having a
mean particle size of below 1.5 mm is obtained by grinding pneumatic
tyres, with subsequent removal of ferrous constituents and drying.

8. Thermoplastic elastomeric composition according to any of Claims
1-7, characterized in that the thermoplastic olefin or diolefin
polymer is constituted of ethylene, propylene, butylene, butadiene,
isoprene, or mixtures of these, or it is a copolymer of ethylene, propylene,
butylene, optionally hydrogenated butadiene or isoprene with less
than 50 wt. % of one or more other monomers, such as other olefins
or styrene.

9. Thermoplastic elastomeric composition according to Claim 8, characterized in that the thermoplastic olefin or diolefin polymer is polyethylene.

10. Thermoplastic elastomeric composition, as is substantially described in the description and/or the examples.

11. Process for the manufacture of a thermoplastic elastomeric composition according to any of Claims 1-10, characterized in that the powdered vulcanized rubber is mixed with the other constituents of the composition at a temperature of below 250 $^{\circ}$C.

12. Process according to Claim 11, characterized in that the powdered vulcanized rubber is mixed with the other constituents of the composition at a temperature of below 200 $^{\circ}$C.

13. Process for processing a thermoplastic elastomeric composition according to any of Claims 1-10 to moulded products by a method known per se, characterized in that the thermoplastic elastomeric composition is processed at a temperature of below 250 oC.

14. Process according to Claim 13, characterized in that the thermoplastic elastomeric composition is processed at a temperature of below 200 $^{\circ}$C.

15. Articles wholly or partially consisting of a thermoplastic elastomeric composition according to any of Claims 1-10.

## DOCUMENTS CONSIDERED TO BE RELEVANT

| Category | Citation of document with indication, where appropriate, of relevant passages | Relevant to claim |
|---|---|---|
| D | US - A - 4 028 288 (J.E. TURNER)<br>* Claims 1,2; column 2, lines 36-55 *<br><br>-- | 1,5-15 |
| | FR - A - 2 335 555 (MONSANTO)<br>* Claim 1; page 5, lines 3-21 *<br><br>-- | 1,5-6,<br>8-15 |
| | GB - A - 1 019 670 (HULS)<br>* Claim 1; page 1, lines 54-62 *<br><br>---- | 2-3 |

**CLASSIFICATION OF THE APPLICATION (Int. Cl. 3)**

C 08 L 19/00
   9/00
   23/02 //
(C 08 L 19/00
   9/00
   23/02)
(C 08 L 9/00
   19/00)
(C 08 L 23/02
   19/00)

**TECHNICAL FIELDS SEARCHED (Int.Cl. 3)**

C 08 L 19/00
   9/00
   23/02
   21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-10-1980 | V. HUMBEECK |

EPO Form 1503.1   06.78